Europäisches Patentamt

European Patent Office

Office européen des brevets

(19)

(11) Publication number: **0 109 244**
**B1**

(12) # EUROPEAN PATENT SPECIFICATION

(45) Date of publication of patent specification: **08.04.87**

(51) Int. Cl.⁴: **A 21 D 8/04,** A 23 L 1/10, A 23 L 1/16

(21) Application number: **83306770.5**

(22) Date of filing: **07.11.83**

(54) **A bread or other cereal-based food improver composition.**

(30) Priority: **10.11.82 JP 197098/82**

(43) Date of publication of application:
**23.05.84 Bulletin 84/21**

(45) Publication of the grant of the patent:
**08.04.87 Bulletin 87/15**

(84) Designated Contracting States:
**DE FR GB**

(56) References cited:
**BE-A- 393 786**
**CH-A- 245 056**
**FR-A- 879 985**
**FR-A-1 154 658**
**US-A-1 541 263**
**US-A-3 833 738**

(73) Proprietor: **KYOWA HAKKO KOGYO CO., LTD.**
**Ohtemachi Bldg., 6-1 Ohtemachi I-chome**
**Chiyoda-ku Tokyo 100 (JP)**

(72) Inventor: **Inoue, Seijiro**
**3-6-6-, Asahi-machi**
**Machida-shi Tokyo (JP)**
Inventor: **Ota, Shigenori**
**3-6-17, Iwatokita**
**Komae-shi Tokyo (JP)**

(74) Representative: **Lambert, Hugh Richmond et al**
**D. YOUNG & CO. 10 Staple Inn**
**London, WC1V 7RD (GB)**

Courier Press, Leamington Spa, England.

**Description**

The present invention relates to improver compositions for bread and other cereal-based foods e.g. foods produced by treating cereal fluor dough, Udon (wheat noodles), Soba (buck-wheat noodles), Chinese noodles, macaroni, spaghetti, skins for Chinese ravioli and shao-mai, etc.

Also included are processes for the manufacture of improved bread and dough, and other cereal-based foods, using the improver composition of this invention.

More particularly, this invention is based on the use of phospholipase-A (hereinafter referred to as PL-A) as a dough improver.

The use of PL-A containing compositions, e.g. pancreatin, in cereal based foodstuffs is known. For example, US—A—3,520,702 discloses the use of pancreatin, which is a commercially available source of PL-A, in the production of pasta to provide an elastic, less sticky product. According to the '702 patent, the amount of pancreatin used is from 2—100 mg per kg of cereal flour and the most effective amount is 25 mg. Based on commercially available pancreatin preparations, even those having the highest PL-A activity, see Table 1, this corresponds, at most to a PL-A concentration of 25 units per kg of flour. Furthermore, the pancreatin preparation of the U.S. Patent is used as such, i.e. without any pre-treatment.

TABLE 1

| Pancreatin preparation (name of manufacturer) | PL-A activity (units/g) |
|---|---|
| No. 1 (Tokyo Kasei) | 1000 |
| No. 2 (Novo) | 560 |
| No. 3 (Kyowa-Miles) | 960 |
| No. 4 (Kyokuto Seiyaku) | 310 |

Additionally, pancreatin, in combination with amylase is disclosed as an improver for bread doughs in BE—A—393,786.

However, the present invention is based on the finding that pancreatin, or at least untreated pancreatin, is disadvantageous as a source of PL-A for use as an improver in bread and other cereal-based foodstuffs due to the presence, in untreated pancreatin, of protease and lipase which substantially inhibit the effect of PL-A as an improver in such foodstuffs. In particular, the use of PL-A substantially free of protease and lipase substantially enhances the properties of the dough and improves the quality of the finished product.

Accordingly, in one aspect, this invention provides an improver composition for bread and other cereal-based foodstuffs which comprises PL-A substantially free of protease and lipase.

In another aspect there is provided a method of improving bread and other cereal-based foodstuffs which comprises incorporating into the dough used to make the foodstuffs phospholipase-A which is substantially free of protease and lipase.

In yet another aspect, there is provided a dough composition, for the manufacture of bread and other cereal-based foodstuffs and which contains PL-A substantially free from protease and lipase.

If desired, phospholipase-D (hereinafter referred to as PL-D), soybean, lecithin, emulsifiers, or oxidising or reducing agents may be used together with PL-A.

Although PL-A is a well-known enzyme which is widespread in animals and microorganisms and may be used in the present invention irrespective of its origin, the most readily available source of PL-A is, of course, pancreatin originating from animals such as pigs and cows. However, as such pancreatin contains not only PL-A but also protease and lipase, the latter must be inactivated before the pancreatin is used in this invention as the source of PL-A. This inactivation is accomplished by heating the pancreatin in aqueous acid. The preferred conditions are as follows:

| | |
|---|---|
| Pancreatin concentration | 10—20% (w/w) |
| pH | 1.5—4.0 |
| Heating temperature | 70—90°C |
| Heating time | 10—40 min. |

The heat treated pancreatin may be immediately used in accordance with the present invention as a bread or other cereal-based food improver, but preferably it is first dried and ground into powder to provide a more stable and easier to handle product. Alternatively, the dry powder may be produced by freeze-drying or spray-drying the acid treated product.

In the case of bread, the amount of PL-A to be used according to the present invention depends on the quality of wheat flour, the type of finished baked product, the method of breadmaking, the proportions of the ingredients and how much improvement of the bread quality is required. Generally, 10 to 5000 units of phospholipase-A are used per kg of wheat flour. Pancreatin is preferably used in an amount of 0.001 to 0.5% (w/w) (10 to 5000 units in terms of PL-A) on the basis of wheat flour. In case of other cereal-based food, 150 to 5000 units of PL-A are used per kg of cereal flour.

PL-A is usually added to the ingredients of dough for bread prior to the mixing thereof. Alternatively, PL-A may be mixed with either wheat flour or a baker's flour mix containing various auxiliary ingredients. The alternative method has the advantage in that the need for weighing PL-A and adding a suitable amount of PL-A to the ingredients of dough every time the breadmaking is done is saved, and in that the gradual enzymatic reaction is performed during storage to thereby expect a greater ability of PL-A to improve the quality of bread. The advantage is another aspect of the present invention.

The effect of PL-A manifests itself in the physical properties of dough for bread. This enzyme provides the dough with a suitable degree of elasticity and extensibility, and suppresses its stickiness. As the result, the dough comes easy to handle in the subsequent operations. Furthermore, the volume of the finished product is increased, its interior has a well stretched structure in film form, and the finished product has a suitable degree of softness.

In case of other cereal-based food, by the addition of PL-A, the mechanical durability of the dough is improved, the yield on boiling or steaming of dough is enhanced and the palatability after heating is improved.

As already mentioned, PL-A may be used in combination with PL-D. PL-D is a well-known enzyme which is widespread in plants. For example, the enzyme occurs naturally in wheat flour but only at low activity. PL-D from any suitable source may be used in the present invention, a preferred source being vegetable juices such as carrot juice. Preferably, in bread-making at least, PL-D is used in an amount of from 100 to 5000 units per kg of flour.

Soybean lecithin, emulsifiers, or oxidizing or reducing agents may also be utilized in combination with PL-A in accordance with this invention. Soybean lecithin is generally used in an amount ranging from 0.05 to 1% (w/w), the emulsifier preferably in an amount ranging from 0.05 to 0.5% (w/w) and the oxidizing or reducing agent in an amount of from 0.0005 to 0.01% (w/w), such percentages being based on the amount of wheat flour. Suitable emulsifiers include monoglycerides and calcium stearoyl lactylate, and suitable oxidizing or reducing agents include potassium bromate, ascorbic acid and cysteine.

The bread improver according to the present invention may be used in the production of bread by either the sponge-dough process or the straight process. Where the sponge-dough process is applied, PL-A and if necessary PL-D, soybean lecithin, emulsifiers, or, oxidizing or reducing agents are added to either the sponge mix mostly comprising wheat flour, baker's yeast and yeast food, or the dough mix mostly comprising the remaining wheat flour, salt, sugar and shortening, or both. Preferably the PL-A and PL-D are preliminarily added to the sponge mix.

Breadmaking by the sponge-dough process proceeds as follows. Water is added to the sponge mix mostly comprising wheat flour, baker's yeast and yeast food, and the ingredients are mixed and kneaded into a sponge which is fermented at 25 to 35°C for 2 to 5 hours (sponge fermentation). The fermented sponge is mixed with the dough mix mostly comprising the remaining wheat flour, salt, sugar and shortening and to the mixture is added water, and the resulting ingredients are mixed and kneaded into a dough. The dough is allowed to rest for 10 to 40 minutes (floor time) at 25 to 35°C. The dough is then divided into pieces of suitable size and is allowed to rest for 10 to 30 minutes (bench time) at 15 to 35°C. Subsequently, the dough pieces are molded and put into pans. The pieces are subjected to final fermentation at 35 to 45°C until they rise to a predetermined height. Thereafter, the dough pieces are baked at 180—240°C for 10 to 30 minutes.

Breadmaking by the straight process proceeds as follows. Water is added to the ingredients of dough mostly comprising wheat flour, salt, sugar, shortening and yeast food, and the mixture is kneaded into a dough. The dough is fermented at 25 to 35°C for 60 to 180 minutes. The dough is then divided into pieces of suitable size and is allowed to rest for 10 to 30 minutes (bench time) at 15 to 35°C. Subsequently, the dough pieces are molded and put into pans. The pieces are subjected to final fermentation at 35 to 45°C until they rise to a predetermined height. Thereafter, the dough pieces are baked at 180 to 240°C for 10 to 30 minutes.

The bread produced according to the present invention by either method has a large volume and is suitably soft, and its interior is characterized by a well stretched structure in film form. In addition, the bread can be stored for a prolonged period without undergoing much staling.

Lecithin has already been employed as a quality improver for other cereal-based food. Combination of PL-A and lecithin promotes PL-A to improve the quality of dough.

Certain specific embodiments of the present invention are illustrated by the following representative examples and reference examples where "%" refers to weight %, unless otherwise indicated.


Example 1

Bread loaves were produced with treated and untreated pancreatin (see Table 2) by a process consisting of the following steps:

```
                    ┌ High-gluten wheat flour            350 g
   Sponge mix       │ Yeast food (with ascorbic acid)    0.5 g
                    └ Baker's yeast                       10 g
        │
        │◄─────────────── Water 200 ml
        ↓
   mixing and kneading

        ↓

   sponge fermentation (28°C, 4 hr)
        │
        │◄──────────┐ High-gluten wheat flour           150 g
        │           │ Sugar                              30 g
        │ dough mix │ Salt                               10 g
        │           │ Skim milk                          10 g
        │           └ Shortening                         20 g
        │             (hydrogenated palm oil)
        │             m.p.: 38—40°C; acidic value: ≦0.1;
        │             iodine value: 65—80
        │
        │◄─────────────── Water 140 ml
        ↓
   mixing and kneading

        ↓

   floor time (28°C, 20 min)

        ↓

   dividing

        ↓

   bench time (room temp., 15 min)

        ↓

   molding

        ↓

   proofing (40°C, 50 min)

        ↓

   baking (220°C, 25 min)

        ↓

   bread
```

In each case (II, III, IV, V) heat-treated pancreatin or untreated pancreatin was added in the amount shown to the initial sponge mix.

4

**0 109 244**

TABLE 2

| Test group | Addition | Amount (%) (to whole wheat flour) | PL-A (units/kg wheat flour) |
|---|---|---|---|
| I | No additive | | |
| II | PL-A, free of protease and lipase prepared as in Ref. Ex. 1 | 0.02 | 76 |
| III | PL-A, free of protease and lipase prepared as in Ref. Ex. 1 | 0.04 | 152 |
| IV | Untreated pancreatin | 0.01 | 71 |
| V | Untreated pancreatin | 0.02 | 142 |

During the process the physical properties of the dough of each test group was evaluated as well as the quality of the bread after storage at 20°C for 48 hours. The results are shown in Table 3.

TABLE 3

| | Test group | | | | |
|---|---|---|---|---|---|
| | I | II | III | IV | V |
| **Physical properties of dough** | | | | | |
| elasticity | ○ | ○ | ○ | X | — |
| extensibility | X | ○ | ◎ | X | — |
| non-stickiness | X | ○ | ○ | X | — |
| moldability | △ | ○ | ◎ | X | — |
| **Bread quality** | | | | | |
| specific volume | 4.56 | 4.67 | 4.74 | 3.92 | — |
| film stretching in linear structure | X | ○ | ◎ | X | — |
| texture of inner structure | △ | ○ | ○ | X | — |
| flavor | ○ | ○ | ○ | X | — |
| relative staleness | 100 | 93 | 88 | 106 | — |

(Notes)
1. Rating index (for organoleptic test by skilled engineers);
    Very good ..... ◎     Good ..... ○
    Moderate ..... △     Poor ..... X
    Impossible to evaluate .....–

2. Specific volume: Measured by the rapeseed displacement method.
3. Relative staleness: Measured with a baker's compressimeter and expressed with the value of the control being taken as 100.

As will be seen from the results presented in Table 3, test groups II and III according to this invention were characterized by good physical properties of the dough, i.e. high specific volume and improved inner structure, whilst the bread stayed fresh longer. On the other hand, the dough of test group IV using untreated pancreatin was badly damaged and no high-quality bread could be made. The dough of test group V also containing untreated pancreatin was so considerably damaged that no bread could be made at all.

5

Example 2

The procedure of Example 1 was repeated except that PL-A prepared from heat-treated pancreatin and/or soybean lecithin were used as listed in Table 4. The physical properties of the dough of each test group during breadmaking and the quality of the bread after storage at 20°C for 48 hours are shown in Table 5.

TABLE 4

| Test group | Additive | Amount (%) (to whole wheat flour) | PL-A (units/kg wheat flour) |
|---|---|---|---|
| I | No additive | | |
| II | PL-A, (Prepared in Ref. Ex. 1) | 0.04 | 152 |
| III | Soybean lecithin paste (AY lecithin by Hohnen Oil Co. Ltd.) | 0.3 | |
| IV | PL-A (prepared in Ref. Ex. 1) | 0.04 | 152 |
| | Soybean lecithin paste | 0.3 | |

TABLE 5

| | Test group | | | |
|---|---|---|---|---|
| | I | II | III | IV |
| Physical properties of dough elasticity | ○ | ○ | ○ | ○ |
| extensibility | X | ○ | X | ◎ |
| non-stickiness | △ | ○ | △ | ◎ |
| moldability | △ | ◎ | △ | ◎ |
| Bread quality specific volume | 4.50 | 4.74 | 4.56 | 4.79 |
| film stretching in linear structure | X | ◎ | △ | ◎ |
| texture of inner structure | △ | ○ | △ | ◎ |
| flavor | ○ | ○ | ○ | ○ |
| relative staleness | 100 | 91 | 99 | 77 |

(Note) The same method of evaluation as in Example 1 was applied.

Dough samples of test group IV had even better physical properties and more improved inner structure than those of other test groups. The corresponding bread samples also showed a remarkable improvement in storage time before becoming stale.

Example 3

The procedure of Example 1 was repeated except that PL-A samples listed in Table 2 were replaced by PL-A prepared from heat-treated pancreatin and/or PL-D enzyme preparations set forth in Table 6. The physical properties of the dough of each test group during breadmaking and the quality of the bread after storage at 20°C for 48 hours are shown in Table 7.

# 0 109 244

## TABLE 6

| Test group | Additive | Amount (%) (to whole wheat flour) | Enzyme (units/kg wheat flour) |
|---|---|---|---|
| I | No additive | | |
| II | PL-D (made in Ref. Ex. 2) | 0.01 | 294 |
| III | PL-A (made in Ref. Ex. 1) | 0.08 | 304 |
| IV | PL-D (made in Ref. Ex. 2) ⎤ | 0.01 | 294 |
| | PL-A (made in Ref. Ex. 1) ⎦ | 0.08 | 304 |

## TABLE 7

| | Test group I | II | III | IV |
|---|---|---|---|---|
| Physical properties of dough | | | | |
| elasticity | ○ | ◎ | ○ | ◎ |
| extensibility | X | X | ◎ | ◎ |
| non-stickiness | X | ◎ | ○ | ◎ |
| moldability | △ | ○ | ◎ | ◎ |
| Bread quality | | | | |
| specific volume | 4.48 | 4.59 | 4.70 | 4.71 |
| film stretching in linear structure | X | △ | ◎ | ◎ |
| texture of inner structure | △ | ○ | ○ | ◎ |
| flavor | ○ | ○ | ○ | ○ |
| relative staleness | 100 | 97 | 86 | 87 |

(Note) The same method of evaluation as in Example 1 was applied.

Test groups III and IV were characterized by improved physical properties of dough and better bread quality as compared with test groups I and II.

Example 4

The procedure of Example 1 was repeated except that the PL-A samples shown in Table 2 and the high-gluten wheat flour as in ingredient of the sponge were replaced by the PL-A-containing high gluten wheat flour identified in Table 8. The physical properties of the dough of each test group during breadmaking and the quality of the bread after storage at 20°C for 48 hours are shown in Table 9.

## TABLE 8

| Test group | Additive |
|---|---|
| I | No additive |
| II | High-gluten wheat flour containing 0.01% PL-A prepared in Ref. Ex. 1: (as PL-A: 38 units/kg wheat flour) |
| III | High-gluten wheat flour containing 0.03% PL-A prepared in Ref. Ex. 1 (as PL-A: 114 units/kg wheat flour) |

7

TABLE 9

Test group

| | I | II | III |
|---|---|---|---|
| Physical properties of dough | | | |
| elasticity | △ | ○ | ○ |
| extensibility | △ | ○ | ◎ |
| non-stickiness | X | ○ | ○ |
| moldability | △ | ○ | ○ |
| Bread quality | | | |
| specific volume | 4.82 | 4.88 | 4.97 |
| film stretching in linear structure | X | ◎ | ◎ |
| texture of inner structure | X | ◎ | ○ |
| flavor | ○ | ○ | ○ |
| relative staleness | 100 | 88 | 86 |

(Note) The same method of evaluation as in Example 1 was applied.

Test groups II and III were characterized by improved physical properties of dough and better bread quality as compared with test group I.

Example 5

In this example, 500 g of the dough ingredients listed in Table 10 were mixed with 300 ml of water, and the mixture was kneaded into a dough. The dough was fermented at 28°C for 120 minutes. The fermented dough was divided into pieces, which were rounded and allowed to rest at room temperature for 18 minutes. The dough pieces were shaped in a sheeter-moulder, put into pans, and subjected to the final fermentation at 40°C until they rose over the upper edge of the pan by 1.5 cm. Thereafter, the dough was baked at 220°C for 25 minutes to make loaves.

Control bread loaves were made by repeating the same procedure except that PL-A was omitted from the ingredients set forth in Table 10. The physical properties of the dough of each group and the quality of the bread after storage at 20°C for 48 hours are shown in Table 11.

TABLE 10

| Ingredient | (%) |
|---|---|
| High-gluten wheat flour | 87.61 |
| Refined sugar | 4.00 |
| Salt | 1.75 |
| Shortening | 4.00 |
| Yeast food (with ascorbic acid) | 0.10 |
| Milk powder | 2.00 |
| Defatted soybean meal | 0.50 |
| PL-A prepared as in Ref. Ex. 1 | 0.04 (152 units/kg wheat flour) |

TABLE 11

|  | Control group | Test group |
|---|---|---|
| Physical properties of dough | | |
| elasticity | ○ | ○ |
| extensibility | X | ○ |
| non-stickiness | X | ○ |
| moldability | △ | ◎ |
| Bread quality | | |
| specific volume | 4.41 | 4.58 |
| film stretching in linear structure | X | ○ |
| texture of inner structure | X | ○ |
| flavor | △ | △ |
| relative staleness | 100 | 90 |

(Note) The same method of evaluation as in Example 1 was applied.

As in the sponge-dough process, dough samples of the test group prepared by the straight process using the PL-A obtained in Reference Example 1 had better physical properties than the control. Likewise the bread was of better quality.

Example 6

The procedure of Example 1 was repeated except that the PL-A samples listed in Table 2 were replaced by one or two of the additives listed in Table 12. The physical properties of the dough of each test group and the quality of the bread after storage at 20°C for 48 hours are shown in Table 13.

TABLE 12

| Test group | Additive | Amount (%) (to whole wheat flour) | PL-A (units/kg wheat flour) |
|---|---|---|---|
| I | No additive | | |
| II | PL-A (prepared in Ref. Ex. 1) | 0.04 | 152 |
| III | Monoglyceride (MG) | 0.20 | |
| IV | Calcium stearoyl lactylate (CSL) | 0.20 | |
| V | ⌈ PL-A<br>⌊ MG | 0.04<br>0.20 | 152 |
| VI | ⌈ PL-A<br>⌊ CSL | 0.04<br>0.20 | 152 |

# 0 109 244

## TABLE 13

| | Test group | | | | | |
|---|---|---|---|---|---|---|
| | I | II | III | IV | V | VI |
| **Physical properties of dough** | | | | | | |
| elasticity | ○ | ○ | ○ | △ | ○ | ○ |
| extensibility | X | ○ | X | ◎ | ○ | ◎ |
| non-stickiness | △ | ○ | ○ | △ | ○ | ◎ |
| moldability | △ | ◎ | △ | ○ | ◎ | ◎ |
| **Bread quality** | | | | | | |
| specific volume | 4.56 | 4.72 | 4.61 | 4.69 | 4.74 | 4.78 |
| film stretching in linear structure | X | ◎ | △ | ○ | ◎ | ◎ |
| texture of inner structure | △ | ○ | △ | ◎ | ○ | ◎ |
| flavor | ○ | ○ | ○ | △ | ○ | △ |
| relative staleness | 100 | 92 | 93 | 93 | 85 | 75 |

The action of the PL-A to improve the physical properties of dough and the quality of bread was further enhanced by using the enzyme in combination with MG or CSL.

### Example 7

According to the formulation shown in Table 14, the three types of Udon (wheat noodles) identified in Table 15 were prepared in the conventional manner.

## TABLE 14

| | |
|---|---|
| Medium-gluten wheat flour | 9800 g |
| Table salt | 200 g |
| Water | 3300 g |

## TABLE 15

| Udon test group | Additive | Amount (%) (to whole cereal flour) | PL-A (units/kg cereal flour) |
|---|---|---|---|
| I | No additive | | |
| II | Untreated pancreatin | 0.04 | 284 |
| III | PL-A (prepared in Ref. Ex. 1) | 0.08 | 304 |

As compared with the dough of test group I, the dough of test group III had good elasticity and was excellent in extensibility, and when made into noodles, formed long noodles of good mechanical durability. On the other hand, the dough of test group II became too soft and sticky, and was of poor mechanical durability.

The resulting wheat noodles were boiled at 98°C for 10 minutes, cooled with running water, and the yield of each test group was measured. As shown in Table 16, the results are such that the noodles of test group III had the highest yield and test group II had the worst yield.

**0 109 244**

TABLE 16

| Udon (wheat noodles) | Yield (%) |
|---|---|
| Test group I | 285 |
| Test group II | 270 |
| Test group III | 300 |

Further, after adding soup to the noodles, the palatability was evaluated by an expert's panel. The noodles of test group III were the best in texture. On the contrary, the noodles of test group II were too soft and the worst in palatability.

Example 8

Using the formulation of Table 17, the three types of Chinese noodles identified in Table 18 were produced in the conventional method.

TABLE 17

| Semihigh-gluten wheat flour | 9850 g |
|---|---|
| Brine (powder) | 100 g |
| Table salt | 50 g |
| Water | 3000 g |

TABLE 18

| Chinese noodles test group | Additive | Amount (%) (to whole cereal flour) | PL-A (units/kg cereal flour) |
|---|---|---|---|
| I | No additive | | |
| II | Untreated pancreatin | 0.04 | 284 |
| III | PL-A (prepared in Ref. Ex. 1) | 0.08 | 304 |

As pancreatin and PL-A, the same preparations as used in Example 7 were employed.

As compared with the dough of test group I, the dough of test group III formed noodles higher in tensile strength, of better elasticity, longer and of excellent mechanical durability. On the contrary, the dough of test group II produced noodles which were lacking elasticity, sticky and of poorer mechanical durability.

The resulting noodles were boiled at 98°C for 3 minutes and soup was added thereto. The palatability of each test group was evaluated by an expert's panel. After leaving them untouched at room temperature for an hour, the palatability was again evaluated. As a result, in either case, the noodles of test group III had the best texture and showed the best elasticity. On the contrary, the noodles of test group II were poor in elasticity.

Reference Example 1

(Preparation of PL-A from pancreatin)

Two hundred grams of pig pancreatin (by Miles Laboratories Inc., U.S.A.) was dispersed in 800 ml of water with stirring. The resulting dispersion was adjusted to pH 3.5 with 4N HCl, heated at 70°C for 20 minutes, cooled and 200 g of lactose as a stabilizer was added to prevent the inactivation of PL-A during the freeze-drying. Lyophilization was carried out to obtain a powder sample weighing 400 g.

Determination of the PL-A activity

The PL-A activity of the heat treated pancreatin prepared as above was determined by measuring free fatty acids that were produced as a result of enzymatic reaction with a substrate made of a mixture of soybean phospholipids.

One ml of an enzyme solution having the composition indicated in Table 19 was heated at 30°C for 5 minutes. One ml of a substrate solution, prepared by agitating a 2% (w/w) aqueous solution of SLP-White (by Turu Lecithin Corporation) with a high-speed homogenizer for 10 minutes, was also initially heated to 30°C. The substrate solution was added to the enzyme liquor. An enzymatic reaction was carried out at pH 5.5 and 30°C. Exactly 10 minutes later, the reaction mixture was heated in boiling water for 15 minutes to discontinue the reaction, and the amount of free fatty acids contained in 20 µl of the reaction mixture was

11

determined by Determiner NEFA (by Kyowa-Medex Co. Ltd.) The activity of PL-A was expressed in units (see Table 22) and one unit of PL-A is defined as the amount of the enzyme which forms one µmol of free fatty acids for one minute.

TABLE 19

| | |
|---|---|
| 0.1% (w/w) aqueous dispersion of heat treated pancreatin | 0.2 ml |
| 0.1 M aqueous CaCl₂ solution | 0.1 ml |
| 0.2 M acetic acid-sodium acetate buffer (pH 5.5) | 0.5 ml |
| Deionized water | 0.2 ml |

Determination of the protease activity

The protease activity of the heat treated pancreatin was determined by measuring the absorbance at 280 nm of a trichloroacetic acid soluble material that was produced as a result of the enzymatic reaction with casein as a substrate.

One ml of an enzyme solution having the composition indicated in Table 20 was heated at 30°C for 5 minutes. One ml of a substrate solution prepared from a 1% (w/w) aqueous solution of casein (by Merck & Co., Inc.) was also heated at 30°C. The substrate solution was added to the enzyme liquor to carry out an enzymatic reaction at pH 5.5 and 30°C. Exactly 10 minutes later, 3 ml of 5% (w/v) aqueous trichloracetic acid solution was added to the reaction mixture to discontinue the reaction. The mixture was allowed to stand for 30 minutes and centrifuged, followed by a measurement of the absorbance of the supernatant at 280 nm. The activity of protease (see Table 22) was expressed in units, and one unit of protease is defined as the amount of protease that increases the absorbance at 280 nm by "one" for one minute.

TABLE 20

| | |
|---|---|
| 0.5% (w/w) aqueous dispersion of heat treated pancreatin | 0.2 ml |
| 0.2 M acetic acid-sodium acetate buffer (pH 5.5) | 0.5 ml |
| Deionized water | 0.3 ml |

Determination of the lipase activity

The lipase activity of the heat treated pancreatin was determined by measuring free fatty acids produced by an enzymatic reaction using triglyceride as a substrate.

One ml of an enzyme liquor having the composition indicated in Table 21 was heated at 30°C for 5 minutes. One ml of a substrate solution was prepared by adding 0.4 ml of olive oil to 99.6 ml of a mixture of 0.4% (v/v) olive oil (by Yoshida Pharmaceutical Co. Ltd.) emulsion and 0.5% (w/w) aqueous gum arabic solution, and then stirring the mixture with a high speed homogenizer for 10 minutes. The resulting substrate was also initially heated to 30°C and added to the enzyme solution to carry out an enzymatic reaction which proceeded at pH 5.5 and 30°C. Exactly 10 minutes later, the reaction mixture was heated in boiling water for 15 minutes to discontinue the reaction. The amount of free fatty acids contained in 20 µl of the reaction mixture was determined by Determiner NEFA. The lipase activity was expressed in units (see Table 22), and one unit is defined as the amount of lipase that forms 1 µmol of free fatty acids for one minute.

TABLE 21

| | |
|---|---|
| 0.1% (w/w) aqueous dispersion of heat treated pancreatin | 0.2 ml |
| 0.1 M aqueous CaCl₂ solution | 0.1 ml |
| 1 M aqueous NaCl solution | 0.1 ml |
| 0.2 M aqueous sodium taurocholate | 0.1 ml |
| 0.2 M acetic acid-sodium acetate buffer (pH 5.5) | 0.5 ml |

PL-A, protease and lipase activity of PL-A preparation of Ref. Ex. 1

The activities of PL-A, protease and lipase of the heat treated pancreatin described in Ref. Ex. 1 are shown in Table 22.

0 109 244

TABLE 22

| | PL-A activity (units/g) | Protease activity (units/g) | Lipase activity (units/g) |
|---|---|---|---|
| Before heating | 712 | 32.00 | 562 |
| After heating | 804 | 0.30 | 0 |
| After drying | 763 | 0.30 | 0 |

From the results of Table 22 it will be seen that before heat treatment the pancreatin shows substantial PL-A activity, protease activity and lipase activity. Upon heat treatment, the activity of PL-A was slightly increased but the activities of protease and lipase became almost zero. When lactose was added as a stabilizer, the reduction in the activity of PL-A due to freeze-drying was negligible.

It is therefore concluded that by subjecting pancreatin to a heat treatment, PL-A enzyme samples substantially free from protease and lipase activities can be produced.

Reference Example 2
(Preparation of PL-D enzyme sample)

Raw carrot (2.94 kg) was crushed and pressed to extract 2,00 ml of juice. With ice-cooling, acetone (4,000 ml) cooled to −20°C in advance was gradually added to the juice, and the mixture was stirred with ice-cooling and centrifuged for 20 minutes at 8,000 rpm. The resulting precipitate was dissolved in 400 ml of water. The solution was stirred for 30 minutes with ice-cooling, and centrifuged for 20 minutes at 8,000 rpm. The resulting supernatant was dialyzed against water for 24 hours at 5°C. The dialyzate was freeze-dried to give 7.28 g of PL-D enzyme sample.

Determination of PL-D activity

The PL-D activity was determined by measuring choline produced by an enzymatic reaction using a mixture of soybean phospholipids as a substrate.

One ml of an enzyme solution having the composition indicated in Table 23 was initially heated to 36°C for 5 minutes. One ml of a substrate, prepared by stirring an 8% (w/w) aqueous SLP-White solution with a high-speed homogenizer for 10 minutes, was also heated to 37°C. The substrate solution was added to the enzyme solution to carry out an enzymatic reaction which proceeded at pH 5.5 and 37°C. Exactly 5 minutes later, 0.5 ml of a reaction terminator [80 mM ethylenediaminetetra-acetic acid disodium salt/1M tris-HCl buffer (pH 8.0)] was added to the reaction mixture in order to discontinue the reaction. The amount of choline contained in 20 μl of the reaction liquor was determined by Determiner-Ch-E (by Kyowa Medex Co. Ltd). The PL-D activity was expressed in units (see Table 24), and one unit is defined as the amount of PL-D that forms 1 μmol of choline for one minute.

TABLE 23

| | |
|---|---|
| Aqueous solution of PL-D | 0.2 ml |
| 0.1 M aqueous CaCl$_2$ solution | 0.2 ml |
| 0.2 M acetic acid-sodium acetate buffer (pH 5.5) | 0.5 ml |
| Deionized water | 0.1 ml |

TABLE 24

| | PL-D activity (units/g) | Yield (g) | Activity yield (%) |
|---|---|---|---|
| Carrot juice | 15.6 | 2,000 | 100 |
| PL-D enzyme sample prepared in Ref. Ex. 2 | 2940 | 7.28 | 69 |

As will be seen by makeup procedures consisting of acetone treatment, dialysis and drying, the PL-D activity of carrot juice was enhanced by about 200 times, with the activity yield being 69%.

**Claims**

1. A phospholipase-A-containing improver composition for bread and other cereal based foodstuffs, characterised in that the composition is substantially free of protease and lipase.

13

2. A composition according to claim 1, characterised in that it comprises phospholipase-A and either or both of phospholipase-D and soybean lecithin, said composition being substantially free of protease and lipase.

3. A composition according to claim 1 or 2, characterised in that the composition contains as said phospholipase-A component a phospholipase-A-containing pancreatin which has been heat treated under acid conditions to destroy its protease and lipase activity.

4. A process for the manufacture of bread and other cereal based foodstuffs which comprises incorporating phospholipase-A into the dough used to make the foodstuff, characterised in that the phospholipase-A used is substantially free of protease and lipase.

5. A process according to claim 4 for the manufacture of bread, characterised in that there is incorporated into the dough used to make the bread phospholipase-A substantially free of protease and lipase, said phospholipase-A being incorporated into the dough in an amount of from 10 to 5000 units of phospholipase-A per kg of flour.

6. A process according to claim 4 for the manufacture of cereal based foodstuffs, other than bread, characterised in that there is incorporated into the dough used to make the foodstuff phospholipase-A substantially free of protease and lipase, said phospholipase-A being incorporated into the dough in an amount of from 150 to 5000 units of phospholipase-A per kg of flour.

7. A process according to claim 5 or 6, characterised in that the phospholipase-A substantially free of protease and lipase is provided in said dough by adding thereto pancreatin which has been heat treated under acid conditions to destroy its protease and lipase activity.

8. A process according to any one of claims 4—7, characterised in that the phospholipase-A is used in combination with phospholipase-D and/or soybean lecithin.

9. A phospholipase-A-containing dough composition for the manufacture of cereal based foodstuffs, characterised in that said phospholipase-A is substantially free of protease and lipase.

10. A composition according to claim 9, which is a bread dough and which contains said phospholipase-A substantially free of protease and lipase in an amount of from 10 to 5000 units per kg of flour.

11. A composition according to claim 9 which is a cereal dough, other than a bread dough, and which contains said phospholipase-A substantially free of protease and lipase in an amount of from 150 to 5000 units per kg of flour.

12. A dough according to any one of claims 9—11, characterised in that it also contains phospholipase-D and/or soybean lecithin.

13. A dough according to any one of claims 9—12, characterised in that said phospholipase-A substantially free of protease and lipase is provided therein as phospholipase-A containing pancreatin which has been heat treated under acid conditions to destroy its protease and lipase activity.


**Patentansprüche**

1. Ein Phospholipase-A enthaltendes Mittel zur Verbesserung von Brot und anderen Nahrungsmitteln auf Getreidebasis, dadurch gekennzeichnet, daß das Mittel im wesentlichen frei von Protease und Lipase ist.

2. Mittel nach Anspruch 1, dadurch gekennzeichnet, daß es Phospholipase-A und Phospholipase-D und/oder Sojabohnenlecithin enthält, wobei das Mittel im wesentlichen frei von Protease und Lipase ist.

3. Mittel nach Anspruch 1 oder 2, dadurch gekennzeichnet, daß das Mittel als die genannte Phospholipase-A-Komponente ein Phospholipase-A enthaltendes Pankreatin enthält, das unter sauren Bedingungen zur Zerstörung seiner Protease- und Lipase-Aktivität wärmebehandelt worden ist.

4. Verfahren zur Herstellung von Brot und anderen Nahrungsmitteln auf Getreidebasis, wobei Phospholipase-A in den zur Herstellung des Nahrungsmittels verwendeten Teig gegeben wird, dadurch gekennzeichnet, daß die verwendete Phospholipase-A im wesentlichen frei von Protease und Lipase ist.

5. Verfahren nach Anspruch 4 zur Herstellung von Brot, dadurch gekennzeichnet, daß in den zur Herstellung des Brots verwendeten Teig Phospholipase-A gegeben wird, die im wesentlichen frei von Protease und Lipase ist, wobei die Phospholipase-A in den Teig in einer Menge von 10 bis 500 Einheiten Phospholipase-A pro kg Mehl gegeben wird.

6. Verfahren nach Anspruch 4 zur Herstellung von anderen Nahrungsmitteln auf Getreidebasis als Brot, dadurch gekennzeichnet, daß in den zur Herstellung des Nahrungsmittels verwendeten Teig Phospholipase-A gegeben wird, die im wesentlichen frei von Protease und Lipase ist, wobei die Phospholipase-A in den Teig in einer Menge von 150 bis 5000 Einheiten Phospholipase-A pro kg Mehl gegeben wird.

7. Verfahren nach Anspruch 5 oder 6, dadurch gekennzeichnet, daß die im wesentlichen von Protease und Lipase freie Phospholipase-A in dem Teig durch Zugabe von Pankreatin bereitgestellt wird, das unter sauren Bedingungen zur Zerstörung seiner Protease- und Lipase-Aktivität wärmebehandelt wordern ist.

8. Verfahren nach einem der Ansprüche 4 bis 7, dadurch gekennzeichnet, daß die Phospholipase-A in Kombination mit Phospholipase-D und/oder Sojabohnenlecithin verwendet wird.

9. Eine Phospholipase-A enthaltende Teigmasse zur Herstellung von Nahrungsmitteln auf

14

Getreidebasis, dadurch gekennzeichnet, daß die Phospholipase-A im wesentlichen frei von Protease und Lipase ist.

10. Masse nach Anspruch 9, welche eine Brotteig ist, und die im wesentlichen von Protease und Lipase freie Phospholipase-A in einer Menge von bis 5000 Einheiten pro kg Mehl enthält.

11. Masse nach Anspruch 9, welche ein anderer Teig auf Getreidebasis als ein Brotteig ist und welche die im wesentlichen von Protease und Lipase freie Phospholipase-A in einer Menge von 150 bis 5000 Einheiten pro kg Mehl enthält.

12. Teig nach einem der Ansprüche 9 bis 11, dadurch gekennzeichnet, daß er ferner Phospholipase-D und/oder Sojabohnenlecithin enthält.

13. Teig nach einem der Ansprüche 9 bis 12, dadurch gekennzeichnet, daß die im wesentlichen von Protease und Lipase freie Phospholipase-A darin als Phospholipase-A enthaltendes Pankreatin bereitgestellt wird, das unter sauren Bedingungen zur Zerstörung seiner Protease- und Lipase-Aktivität wärmebehandelt worden ist.

**Revendications**

1. Composition d'améliorant pour pain et autres produits alimentaires à base de céréales, contenant de la phospholipase A, caractérisée en ce que la composition est pratiquement exempte de protéase et de lipase.

2. Composition selon la revendication 1, caractérisée en ce qu'elle comprend de la phospholipase A et soit de la phospholipase D, soit de la lécithine de soja, ou les deux, ladite composition étant pratiquement exempte de protéase et de lipase.

3. Composition selon la revendication 1 ou 2, caractérisée en ce que la composition contient en tant que dit composant de type phospholipase A, une pancréatine contenant de la phospholipase A, qui a été traitée par la chaleur dans des conditions acides, pour la destruction de son activité de protéase et de lipase.

4. Procédé pour la fabrication de pain et d'autres produits alimentaires à base de céréales, qui comprend l'incorporation de phospholipase A dans la pâte utilisée pour la préparation du produit alimentaire, caractérisé en ce que la phospholipase A utilisée est pratiquement exempte de protéase et de lipase.

5. Procédé selon la revendication 4 pour la fabrication de pain, caractérisé par le fait que de la phospholipase A pratiquement exempte de protéase et de lipase est incorporée dans la pâte utilisée pour la préparation du pain, ladite phospholipase A étant incorporée dans la pâte en une quantité allant de 10 à 5 000 unités de phospholipase A par kg de farine.

6. Procédé selon la revendication 4 pour la fabrication de produits alimentaires à base de céréales, autres que du pain, caractérisé par le fait que de la phospholipase A pratiquement exempte de protéase et de lipase est incorporée dans la pâte utilisée pour la préparation du produit alimentaire, ladite phospholipase A étant incorporée dans la pâte en une quantité allant de 150 à 5 000 unités de phospholipase A par kg de farine.

7. Procédé selon la revendication 5 ou 6, caractérisée par le fait que la phospholipase A pratiquement exempte de protéase et de lipase est introduite dans ladite pâte par addition à celle-ci de pancréatine qui a été traitée par la chaleur dans des conditions acides, pour la destruction de son activité de protéase et de lipase.

8. Procédé selon l'une quelconque des revendications 4 à 7, caractérisé en ce que la phospholipase A est utilisée en combinaison avec de la phospholipase D et/ou de la lécithine de soja.

9. Composition de pâte contenant de la phospholipase A, pour la fabrication de produits alimentaires à base de céréales, caractérisée en ce que ladite phospholipase A est pratiquement exempte de protéase et de lipase.

10. Composition selon la revendication 9, laquelle est une pâte à pain, et contient ladite phospholipase A pratiquement exempte de protéase et de lipase, en une quantité allant de 10 à 5 000 unités par kg de farine.

11. Composition selon la revendication 9, laquelle est une pâte à base céréales, autre qu'un pâte à pain, et qui contient ladite phospholipase A pratiquement exempte de protéase et de lipase, en une quantité allant de 150 à 5 000 unités par kg de farine.

12. Pâte selon l'une quelconque des revendications 9 à 11, caractérisée en ce qu'elle contient également de la phospholipase D et/ou de la lécithine de soja.

13. Pâte selon l'une quelconque des revendications 9 à 12, caractérisée en ce que ladite phospholipase A pratiquement exempte de protéase et de lipase est introduite dans celle-ci sous forme de pancréatine contenant de la phospholipase A, qui a été traitée par la chaleur dans des conditions acides, pour la destruction de son activité de protéase et de lipase.